# EUROPEAN PATENT APPLICATION

(11) **EP 3 680 459 A1**
(43) Date of publication of application: **15.07.2020**
(21) Application number: 19151392.8
(22) Date of filing: 11.01.2019
(51) Int. Cl.: F01K 3/00

(54) **THERMAL ENERGY STORAGE DEVICE**

(71) Applicant: Siemens Gamesa Renewable Energy GmbH & Co. KG, 20097 Hamburg (DE)
(72) Inventor: Barmeier, Till Andreas, 20259 Hamburg (DE); Seidel, Volker, 08860 Castelldefels (ES); Wagner, Jennifer Verena, 20257 Hamburg (DE)
(74) Representative: Aspacher, Karl-Georg

(57) **Abstract**

A thermal energy storage plant (10) comprises a piping (110) where a heat transporting fluid is circulated, a heating device (120) for transferring heat to the heat transporting fluid, a heat accumulator (100) for storing the thermal energy of the heat transporting fluid including a hot end (101) for storing thermal energy at a first temperature (T1) and a cold end (102) for storing thermal energy at a second temperature (T2) lower than the first temperature (T1), the heat accumulator (100) being connected to the piping (110).

The heating device (120) is provided at in interface between the piping (110) and the hot end (101).

## Description

### Field of invention

The present invention relates to a device for storing thermal energy. The present invention further relates to a plant for storing thermal energy including the above-mentioned device.

### Art Background

It is known to store fluctuating electrical energy from renewable energies as heat inside heat storages, in order to reconvert it back to electrical energy in times when the demand is higher than the production.

These heat storages are usually part of thermal energy storage plants which typically further comprise a heater, a steam generator, a steam turbine, a heat transporting fluid, a storage material, and a piping system. In order to achieve a good efficiency of the heat-to-power cycle, i.e. the cycle converting the energy stores as heat in the heat storages to electrical energy, the steam generator should be operated with temperatures of at least 600 °C. Consequently, the heat storage has to be charged with temperatures higher than 600 °C because of heat losses during operation and, in case of horizontal heat storages, the mixing of the temperature profile inside the heat storage due to natural convection.

When charging the heat storage, the part of the piping system which is located in between the heater and the heat storage is undesirably heated up resulting in thermal stresses and heat losses. Additionally, the cost for a piping system increases for higher temperatures because materials with adequate thermal properties have to be used. Because the installation cost for thermal energy storage plants needs to be as low as possible in order to be able to make profit, the use of custom products should be kept at a minimum level.
One known solution to the above inconveniences is that of charging the heat storage at a temperature lower than 600 °C. However, such solution is not optimal because it determines a lower efficiency of thermal energy storage plant.

Another known solution is that of building a thermal energy storage plant having separated charge and discharge circuits.

The charging circuit includes, in a closed loop:
- a first fluid transporting machine for generating a flow of a first heat transporting,
- a heating device for transferring heat to the first heat transporting fluid,
- a heat accumulator for storing the thermal energy of the first heat transporting fluid flowing through the heat accumulator.

The discharging circuit includes, in closed loop:
- a second fluid transporting machine for generating a flow of a second heat transporting fluid,
- the same heat accumulator of the charging circuit,
- a heat exchanger for transforming the thermal energy from the second heat transporting fluid into mechanical power.

The second heat transporting fluid flows through the heat accumulator in an opposite direction with respect to the first heat transporting fluid, thus recovering the thermal energy previously accumulated by operating the charging circuit. The two distinct closed loops determine also heat losses and therefore a decreased efficiency.

Therefore, there may be a need for improving a thermal energy storage plant in such a manner that the above-mentioned inconveniences can be suppressed or reduced in an optimized way.

### Summary of the Invention

This need may be met by the subject matter according to the independent claims. Advantageous embodiments of the present invention are described by the dependent claims.

According to the invention there is provided a thermal energy storage plant comprising:
- a piping where a heat transporting fluid is circulated,
- a heating device for transferring heat to the heat transporting fluid,
- a heat accumulator for storing the thermal energy of the heat transporting fluid including a hot end for storing thermal energy at a first temperature and a cold end for storing thermal energy at a second temperature lower than the first temperature, the heat accumulator being connected to the piping, wherein the heating device is provided at in interface between the piping and the hot end.

The heating device is integrated at in interface between the piping and the heat accumulator, so that there are no pipes in between the heater and the heat storage. When charging the heat storage, the cold heat transporting fluid flows through the piping system until it enters the heat storage where it is heated up to a maximum temperature (e.g. 600 °C) at the hot end. Therefore, the piping outside the heat storage is never heated up.

When discharging the heat storage, i.e. when transferring the heat accumulated in the heat accumulator to an heat exchanger, e.g. a steam generator, the piping is heated up but at a temperature lower than the maximum temperature at the hot end. Consequently, with respect to the prior art, a comparably less expensive piping system can be installed and additional costs for custom products can be saved.

Furthermore, the pressure drop is reduced by the lower gas velocity in the piping due to lower temperature and consequently higher density and lower volume of the fluid.

Because the path of the heat transporting fluid from the heater to the storage material inside the heat storage is reduced to a minimum, the response time of the heat storage is also significantly reduced with respect to the prior art. A more accurate operation can be realized because there is no hot heat transporting fluid outside the heat storage when stopping the charging process. This makes the heat storage more compatible to balancing energy tasks.

According to possible embodiments of the present invention, the heating device may be provided at the hot end of the heat accumulator or at an outlet of the piping connected to the hot end of the heat accumulator.

According to a possible embodiment of the present invention, the interface between the piping and the heat accumulator comprises a lattice for separating the heat accumulator and the piping, the heating device being provided on the lattice.

In particular, the heating device may be inductive or resistive.

A lattice is normally installed at the openings of the heat storage for preventing the storage material in the heat storage from entering the piping. Integrating the heating device in the lattice determines no additional pressure drop and further minimizes the installation costs. The heat is therefore transported from the lattice via the heat transporting fluid to the storage material.

According to a possible embodiment of the present invention, the heating device comprises a plurality of sections, each section being configured to be heated independently from the other sections.

In particular, the heater may consist of a plurality of sections distributed vertically to individually control the heat addition distribution at the cross section of the storage hot end. The proximity between the heater and the storage hot end makes it possible to control the local distribution of the heat addition into the storage. If the lower part of the storage is colder than the upper part, the resistance heater in the lattice can be controlled so that only the lower part of the lattice is heated.

According to possible embodiments of the present invention, the thermal energy storage plant includes a charging circuit comprising:
- the piping,
- the heat accumulator,
- a fluid transporting machine configured for generating a flow of the heat transporting fluid from the hot end to the cold end.

The thermal energy storage plant may further include a discharging circuit comprising:
- the piping,
- the heat accumulator,
- the fluid transporting machine configured for generating a flow of the heat transporting fluid from the cold end to the hot end,
- a heat exchanger for receiving the thermal energy from the heat transporting fluid.

The integration between the charging circuit and the discharging circuit, which for example shares the same fluid transporting machine permits avoiding the inconveniences associated to completely separated charge and discharge circuits.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Fig. 1: shows a schematic diagram of a thermal energy storage plant, according to an exemplary embodiment of the present invention,
- Fig. 2: shows a schematic diagram of the thermal energy storage plant of figure 1, in another operative configuration,
- Fig. 3: shows a schematic view of a component of the thermal energy storage plant of Fig. 1.

### Detailed Description

The illustration in the drawing is schematically. It is noted that in different figures, similar or identical elements or features are provided with the same reference signs. In order to avoid unnecessary repetitions elements or features which have already been elucidated with respect to a previously described embodiment are not elucidated again at a later position of the description.

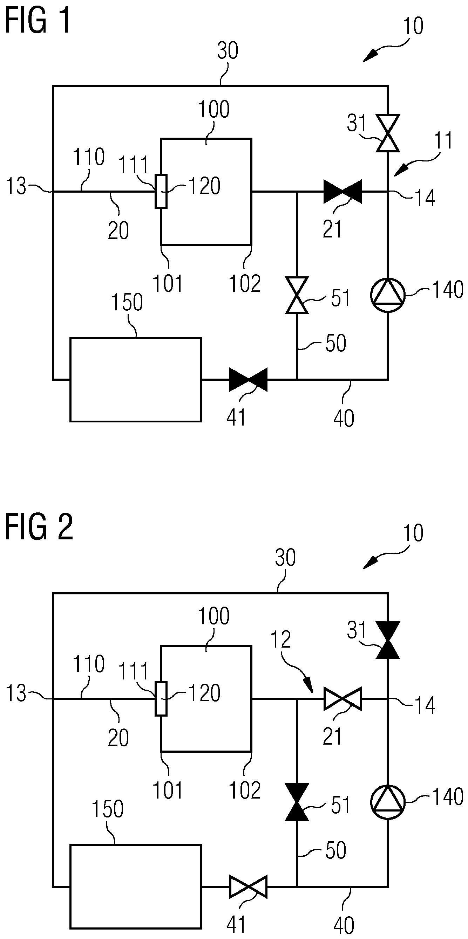

**Figures 1** and **2** schematically show a thermal energy storage plant 10 where a heat transporting fluid is circulated.

The heat transporting fluid may be, in particular, constituted by air or another gas suitable for transporting thermal energy.

The thermal energy storage plant 10 includes a heat accumulator 100, a piping 110, a fluid transporting machine 140 (when the heat transporting fluid is air or another gas, the fluid transporting machine 140 may be constituted by a fan or blower), a heat exchanger 150 and a plurality of valves 21, 31, 41, 51, arranged as specified in the following.

The thermal energy storage plant 10 includes three branches 20, 30, 40 in parallel to each other, all three extending between a first node 13 and a second node 14 of the thermal energy storage plant 10.

A first branch 20 extending between the two nodes 13, 14 comprises:
- the heat accumulator 100 in an intermediate position between the first node 13 and a second node 14,
- a first valve 21 interposed between the heat accumulator 100 and the second node 14 of the thermal energy storage plant 10.

The first node 13, the heat accumulator 100, the first valve 21 and the second node 14 are respectively connected in series by respective portions of the piping 110. The piping 110 comprises an outlet 111 connected to the hot end 101 of the heat accumulator 100.

The heat accumulator 100 is configured as a vessel extending between a hot end 101 and a cold end 102 and oriented in such a way that a portion of the piping 110 directly connects the first node 13 to the hot end 101 and another portion of the piping 110 directly connects the cold end 102 to the first valve 21.

The heat accumulator 100 is hollow and contains a plurality of heat storing elements having high thermal capacity, for example solid or bulk materials like stones, bricks, ceramics and other solid materials, which have the ability to be heated up and to keep their temperature over a long period of time in order to store the thermal energy which has been transferred to them through the heat transporting fluid. At the interface between the piping 110 and the hot end 101, a heating device 120 is provided for heating the heat transporting fluid which enters the heat accumulator 100, during a charging phase. Inside the heat accumulator 100, the thermal energy of the heat transporting is transferred to the heat storing elements.

The heating device 120 may be integrated in the heat accumulator 100, at the hot end 101.

Alternatively, the heating device 120 may be integrated in in the piping 110, at the outlet 111 connected to the hot end 101 of the heat accumulator 100.

The heating device 120 permits the first hot temperature T1 and the second cold temperature T2 to be established between the hot end 101 and cold end 102 of the heat accumulator 130. According to possible embodiments of the present invention, typical values are T1 = 600 °C and T2 = 120 °C. In other possible embodiments, values of T2 may be close to ambient temperature or 300 °C.

The heating device 120 may comprises a plurality of sections, each section being configured to be heated independently from the other sections. Such feature of the heating device 120 makes it possible to control the local distribution of the heat addition into the heat accumulator 100. If the heat accumulator 100 is oriented horizontally and if a lower part of the heat accumulator 100 is colder than an upper part, the heating device 120 can be controlled so that only the lower part of the lattice is heated. Therefore, if the heat accumulator 100 is oriented horizontally, the heating device 120 may comprises a plurality of sections vertically distributed.

A second branch 30 extending between the two nodes 13, 14 comprises a second valve 31 interposed between the first node 13 and a second node 14.

The first node 13, the second valve 31 and the second node 14 are respectively connected in series by respective portions of the piping 110.

A third branch 40 extending between the two nodes 13, 14 comprises:
- a heat exchanger 150 for receiving thermal energy from the heat transporting fluid during a discharge phase,
- a third valve 41,
- the fluid transporting machine 140.

The first node 13, the heat exchanger 150, the third valve 41, the fluid transporting machine 140 and the second node 14 are respectively connected in series by respective portions of the piping 110.

According to embodiments of the present invention, the heat exchanger 150 is a steam generator for transferring thermal energy from the heat transporting fluid to a mass of water in order to generate steam to be fed to the thermal machine (not shown in the attached figures. The thermal machine may be a steam turbine having an output shaft connected to an electrical generator to produce electricity to be fed in an electricity grid.

According to another possible embodiment, the heat exchanger 150 is a boiler or an evaporator or other type of heat exchanger for receiving heat from the heat transporting fluid. The thermal energy storage plant 10 further includes a by-pass branch 50 for connecting the first branch 20 and the third branch 40. The by-pass branch 50 includes a fourth valve 51. The by-pass branch 50 extends between a section of the first branch 20 comprised between the heat accumulator 100 and the first valve 21 and a section of the third branch 40 comprised between the third valve 41 and the fluid transporting machine 140.

The charging phase of the thermal energy storage plant 10 is performed through a charging circuit 11 (figure 1) obtained by closing the first valve 21 and the third valve 41 and by opening the second valve 31 and the fourth valve 51 in the above described thermal energy storage plant 10.

In the charging circuit 11 the fluid transporting machine 140 generates a flow of the heat transporting fluid, which through the second branch 30 reaches the interface between the piping 110 and hot end 101 of the heat accumulator 100, where the heating device 120 is provided. The heat transporting fluid is heated by the heating device 120 and enters the heat accumulator 100 for transferring the thermal energy received from the heating device 120 to the heat storing elements inside the heat accumulator 100. Downstream the cold end 102 of the heat accumulator 100, the heat transporting fluid returns to the fluid transporting machine 140 through the by-pass branch 50.

The discharging phase of the thermal energy storage plant 10 is performed through a discharging circuit 12 (figure 2) obtained by opening the first valve 21 and the third valve 41 and by closing the second valve 31 and the fourth valve 51 in the above described thermal energy storage plant 10.

In the discharging circuit 12 the fluid transporting machine 140 generates a flow of the heat transporting fluid, which through the first valve 21 reaches the cold end 102 of the heat accumulator 100. The heat transporting fluid crosses then the heat accumulator 100 from the cold end 102 to the hot end 101, i.e. in opposite direction with respect to the flow of the heat transporting fluid in the charging circuit 11. Inside the heat accumulator 100, during the discharge phase, the heat transporting fluid receives thermal energy from the heat storing elements inside the heat accumulator 100. Such thermal energy is transported from the heat transporting fluid to the heat exchanger 150. Downstream the heat exchanger 150 the heat transporting fluid returns to the fluid transporting machine 140 through the third valve 41.

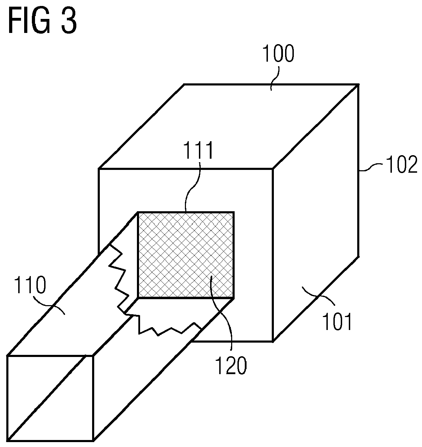

**Figure 3** schematically shows an embodiment of the heater 120. At the interface between the piping 110 and the hot end 101 a lattice or grid 120 is provided for separating the inside of the heat accumulator 100 and the piping 110, thus avoiding that the heat storing elements inside the heat accumulator 100 are not exiting the heat accumulator 100 and entering the piping 110. The heating device is provided on the lattice or grid 120. The lattice or grid 120 can be heated up inductively or it can function as a resistance heater.

## Claims

1. Thermal energy storage plant (10) comprising:
a piping (110) where a heat transporting fluid is circulated,
a heating device (120) for transferring heat to the heat transporting fluid,
a heat accumulator (100) for storing the thermal energy of the heat transporting fluid including a hot end (101) for storing thermal energy at a first temperature (T1) and a cold end (102) for storing thermal energy at a second temperature (T2) lower than the first temperature (T1), the heat accumulator (100) being connected to the piping (110), wherein the heating device (120) is provided at in interface between the piping (110) and the hot end (101).

2. Thermal energy storage plant (10) according to claim 1, wherein the heating device (120) is provided at the hot end (101) of the heat accumulator (100).

3. Thermal energy storage plant (10) according to claim 1, wherein the heating device (120) is provided at an outlet (111) of the piping (110) connected to the hot end (101) of the heat accumulator (100).

4. Thermal energy storage plant (10) according to any of the preceding claims, wherein the interface between the piping (110) and the hot end (101) comprises a lattice (120) for separating the heat accumulator (100) and the piping (110), the heating device being provided on the lattice.

5. Thermal energy storage plant (10) according to any of the preceding claims, wherein the heating device (120) comprises a plurality of sections, each section being configured to be heated independently from the other sections.

6. Thermal energy storage plant (10) according to any of the preceding claims, wherein the heating device (120) is inductive or resistive.

7. Thermal energy storage plant (10) according to any of the preceding claims, wherein the thermal energy storage plant (10) includes a charging circuit (11) comprising:
the piping (110),
the heat accumulator (100),
a fluid transporting machine (140) configured for generating a flow of the heat transporting fluid from the hot end (101) to the cold end (102).

8. Thermal energy storage plant (10) according to any of the preceding claims, wherein the thermal energy storage plant (10) includes a discharging circuit (12) comprising:
the piping (110),
the heat accumulator (100),
the fluid transporting machine (140) configured for generating a flow of the heat transporting fluid from the cold end (102) to the hot end (101),
a heat exchanger (150) for receiving the thermal energy from the heat transporting fluid.

9. Heat accumulator (100) for a thermal energy storage plant (10), the heat accumulator (100) comprising a passage for the circulation of a heat transporting fluid between a hot end (101) and a cold end (102), the hot end (101) being configured for storing thermal energy at a first temperature (T1), the cold end (102) being configured for storing thermal energy at a second temperature (T2) lower than the first temperature (T1), wherein the heat accumulator (100) comprises a heating device (120) at the hot end (101).

10. Heat accumulator (100) according to claim 9, wherein the hot end (101) comprises a lattice (120) an inside and an outside of the heat accumulator (100), the heating device being provided on the lattice.

11. Heat accumulator (100) according to claim 9 or 10, wherein the heating device (120) is inductive or resistive.
